Europäisches Patentamt

**European Patent Office**

**Office européen des brevets**

(11) Numéro de publication: **0 357 740 B1**

(12) **FASCICULE DE BREVET EUROPEEN**

(45) Date de publication de fascicule du brevet: **29.09.93** (51) Int. Cl.⁵: **F03D 1/06**

(21) Numéro de dépôt: **89903167.8**

(22) Date de dépôt: **22.02.89**

(86) Numéro de dépôt internationale :
**PCT/FR89/00070**

(87) Numéro de publication internationale :
**WO 89/08187 (08.09.89 89/21)**

(54) **TURBO-EOLIENNE.**

(30) Priorité: **25.02.88 FR 8802284**

(43) Date de publication de la demande:
**14.03.90 Bulletin 90/11**

(45) Mention de la délivrance du brevet:
**29.09.93 Bulletin 93/39**

(84) Etats contractants désignés:
**AT BE CH DE FR GB IT LI LU NL SE**

(56) Documents cités:
WO-A-87/07328     DE-A- 3 047 501
DE-C- 152 387     DE-C- 804 090
FR-A- 1 338 164   FR-A- 2 295 256
FR-A- 2 503 270   FR-A- 2 505 938
FR-A- 2 507 252   US-A- 4 159 191
US-A- 4 432 695   US-A- 4 781 523

(73) Titulaire: **ANTILLEAN WINDENERGY COMPA-
NY N.V.
Polarisweg 35
Curacao(AN)**

(72) Inventeur: **ANTILLEAN WINDENERGY COMPA-
NY N.V.
Polarisweg 35
Curacao(AN)**

(74) Mandataire: **Callewaert, Jean et al
Bureau Gevers S.A. rue de Livourne 7 bte 1
B-1050 Bruxelles (BE)**

EP 0 357 740 B1

## Description

L'invention concerne une éolienne comprenant un rotor conique ayant une pluralite de pales, ledit rotor ayant un axe central et étant agencé pour tourner autour dudit axe central, ledit rotor étant également agencé pour être disposé avec son axe central sensiblement parallèle à la direction du vent.

Une telle éolienne est connue du brevet DE PS 804.090. L' éolienne connue comporte également une roue placée en aval du rotor conique. Les pales de cette roue servent à dévier le vent qui entre dans l'éolienne de telle façon qu'il attaque les' pales du rotor sensiblement perpendiculairement par rapport à leur surface. Le vent fait tourner l'ensemble roue-rotor qui est monté sur un même axe et qui entraîne ainsi un moteur situé dans ce même axe dans le flux du vent qui passe le long des pales.

Un désavantage de cette éolienne connue est que le moteur se trouve dans l'espace situé directement en aval du rotor. Cette présence gène fortement le passage de l'air qui a travaillé sur les pales et réduit ainsi le rendement de cette éolienne.

Un autre désavantage de l'éolienne connue est qu'il y a de larges ouvertures entre les pales successives du rotor, ce qui a pour conséquence qu'une faible partie seulement de la surface disponible est utilisée pour retenir de l'énergie au vent. De plus, la présence de la roue placée en aval du rotor conique aura pour effet de diminuer la vitesse du vent et ainsi le rendement de l'éolienne.

L'invention a pour but de réaliser une éolienne qui donne un meilleur rendement.

A cette fin, l'éolienne suivant l'invention est caractérisée en ce les pales occupent sensiblement l'ensemble de la surface conique extérieure du rotor, chacune des pales ayant une extrémité formant la pointe dudit rotor, ladite pointe étant disposée sensiblement sur ledit axe, lesdites pales étant disposées en oblique par rapport à ladite direction du vent, ladite éolienne comprenant également des déflecteurs placés autour d'un bord périphérique du rotor. Puisque pales occupent sensiblement l'ensemble de la surface extérieure du rotor et qu'elles sont disposées en oblique par rapport à la direction du vent, le vent peut, après avoir poussé les pales, trouver un espace plus grand que celui par lequel il est arrivé et ainsi se dilater. La présence des déflecteurs permet de créer une dépression supplémentaire à l'arrière de la roue conique qui favorisera l'élargissement de la surface de passage de l'air ayant travaillé sur le rotor. La disposition des pales et l'utilisation des déflecteurs contribuent ainsi a créer à l'arrière du rotor conique un espace dans lequel l'air peut se dilater permettant ainsi au vent de travailler sans être gêné par l'air qui est passé le long des pales, offrant, par la même occasion, un excellent rendement de l'éolienne.

Au lieu d'utiliser un rotor conique, on peut également utiliser une roue sensiblement plate ayant une pluralité de pales pour construire une éolienne suivant l'invention. Une telle éolienne est alors caractérisée en ce qu'en amont des pales, qui occupent sensiblement l'ensemble de la surface de la roue, une grille de second déflecteur est montée, ladite grille étant agencée pour dévier le vent de telle façon qu'il attaque obliquement lesdites pales, ladite éolienne comprenant également des premiers déflecteur placés autour d'un bord périphérique de la roue. La grille de déflecteur sert à canaliser le vent obliquement par rapport aux pales et ainsi à obtenir que l'air attaque obliquement les pales et puisse se dilater après avoir passé le long des pales.

Une première forme de réalisation préférentielle d'une éolienne suivant l'invention est caractérisée en ce que les pales sont agencées pour dévier le vent qui les attaque de telle façon que le vent, après avoir traversé le plan formé par les surfaces des pales, les quitte en une direction sensiblement perpendiculaire à ce plan. En quittant les pales de façon perpendiculaire, l'air pourra se dilater fortement créant ainsi une grande dépression, elle-même favorable au rendement de l'éolienne.

Une deuxième forme de réalisation préférentielle d'une éolienne suivant l'invention est caractérisée en ce qu'elle comporte au moins un troisième déflecteur périphérique agencé pour dévier le vent par rapport au volume formé par l'éolienne. En déviant l'air par rapport au volume de l' éolienne, on augmente l'espace dans lequel l'air qui a traversé l'éolienne pourra se dilater.

De préférence, le troisième déflecteur périphérique comporte deux ailes disposées sensiblement parallèles l'une à l'autre et agencé pour créer l'effet Coanda. Grâce à l'effet Coanda ainsi obtenu, on augmente le rendement de l'éolienne.

L'invention sera maintenant décrite plus en détail à l'aide des dessins montrant quelques exemples de réalisation d'une éolienne suivant l'invention. Dans ces dessins, :

Les figures 1, 2 et 3 montrent des éoliennes classiques.

La figure 4 illustre le passage de l'air dans une éolienne suivant' l'invention.

La figure 5 montre un petit modèle d'une éolienne suivant l'invention.

La figure 6 illustre une éolienne suivant l'invention et pourvue de moyens permettant son orientation par rapport à la direction du vent.

Les figures 7, 8, 9, 10 et 12 illustrent des éoliennes suivant l'invention et pourvues d'un rotor conique ainsi que de déflecteurs périphériques.

La figure 11 montre une éolienne suivant l'invention pourvue d'une roue plate et de déflecteurs.

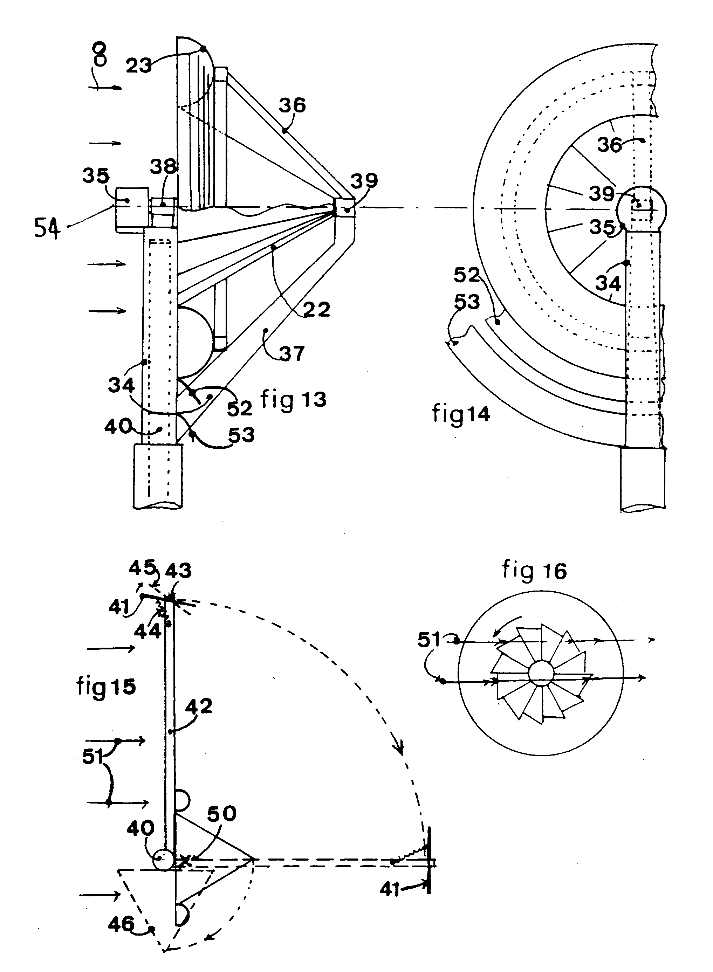

Les figures 13 et 14 illustrent en détail une éolienne suivant l'invention et pourvue d'un rotor conique.

La figure 15 illustre une éolienne suivant l'invention et pourvue de moyens de sécurité agencés pour agir en cas de tempête.

La figure 16 montre une vue de face d'une éolienne suivant l'invention.

Dans les dessins, une même référence est assignée à un même élément ou à un élément analogue.

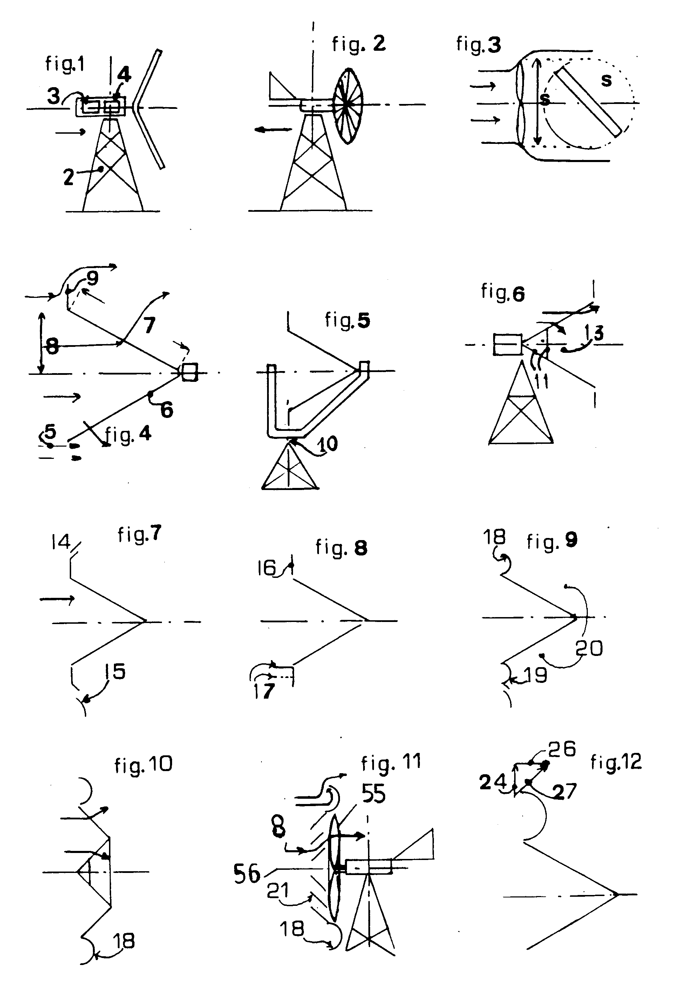

Les roues éoliennes multipales, dites Américaines, (Fig 2), moins fragiles mais très lentes, encore construites, surtout pour pomper de l'eau, ont accrédité l'idée, erronée, qu'elles sont lentes par principe.

Raison de cette opinion: La puissance maximum d'une éolieene est donnée par la formule de BETZ: Pmax = 0,37 S $V^3$ pour V = vitesse du vent et S = section de la veine d'air traversant l'éolienne. (Fig 3). Cette surface S, est communément appelée "surface balayée par l'hélice", expres sion exacte quand l'hélice intercepte tout le volume de la veine d'air, mis inexacte quand les pales soumises au vent n'occupent qu'une faible ...partie de l'aire parcourue (Fig 3). Cela explique les faibles rendements des éoliennes classiques par rapport à cette surface (moins de 30%). Les constructeurs, abusés par cette expression malencontreuse, butent main tenant sur les difficultés liées aux hélices bipales géantes.

SOLUTION: Les roues multipales actuelles ne permettent pas à l'air ay ant travaillé et ayant diminué de vitesse de se dilater en quittant les pales, en plus du fait que le vent périphérique (5-Fig 4) le rabat vers le centre. Pour y arriver, les pales de notre turbine sont disposées en oblique par rapport à la direction du vent (6-Fig 4). Après avoir poussé les pales, l'air ralenti trouve un espace (7-Fig 4) plus grand que celui par lequel il est arrivé (8-Fig 4) et peut se dilater en sortant perpendicula irement aux pales.

Le vent extérieur (5) est dévié par un déflecteur périphérique (9-Fig 4) pour ne pas gêner lui aussi l'évacuation de l'air ayant travaillé. Ce déflecteur, de préférence indépendant, peut faire corps avec la turbine dans les petits modèles pour diminuer le prix de revient. (Fig 5) La turbine ressemble a un entonnoir avalant le vent et est décalée vers l'arrière du pivot (IO-Fig 5) pour pouvoir s'orienter sans auxiliaire. Pour faciliter l'orientation automatique, on peut aussi mettre la pointe en avant à condition de ménager une zone de détente (I3-Fig 6) au centre au moyen d'un cône ou d'une plaque étanche. (II-Fig 6).

Les déflecteurs extérieurs, nécessaires dans tous les cas, peuvent être mu nis de fentes comme les ailes d'avion (I4-Fig 7) ou pour créer l'effet "Coanda". (I5)

Ils peuvent être constitués par une couronne plate (I6-Fig 8) munie ou non à l'entrée d'un cylindre (I7-Fig 8) canalisant l'air d'un côté ou de l'autre, ou de préférence par une couronne creuse (I8-I9-Fig 9) dont le $C_x$ est maximum. Leur rôle est essentiel en créant une dépression supplémentaire (20) à l'arrière de la turbine, ce qui augmente la vitesse de l'air, donc aussi la puissance.

La combinaison des systèmes Fig 6 et Fig 7, selon la figure IO, avec un tronc de cône renversé suivant un cône au centre dirigé vers le vent donne un appareil moins profond.

Une 4° solution consiste à utiliser une roue plate classique (Fig II) précédée par une grille de déflecteurs (2I), canalisant le vent obliquement p par rapport aux pales, le déflecteur périphérique (I8) restant indispensable. Les pales motrices, contrairement a certains projets, sont au centre, d'où les avantages suivants: légèreté, vitesse, solidité, possibitité de frettage, la turbine ainsi constituée étant obligatoirement entourée de déflec cteurs à double utilité: création de l'espace de dilatation et accélération de l'air dévié (augmentant la dépression).

La vitesse du vent (26-Fig I2) se combine vectoriellement avec la vitesse du vent sortant, (24), et donne une résultante (27) plus grande, fonction de la direction de (24).

CALCUL DE CETTE AUGMENTATION:

Rappelons la formule de la traînée :
Traînée = $C_x$ x I/2 $\rho$ x S x $V^2$ ($\rho$ = poids spécifique du $M^3$)
Comme $\rho$ de l'air = I,25, et la surface unitaire étant S = Im² = I, la Trainée vaut donc Trainée = $C_x$ x I/2 x I,25 $V^2$ = 0,62 $C_x V^2$ (A). Le $C_x$ précise l'effet de l'obstacle sur la trainée, donc sur le vent. Comme $C_x$ = $(\sqrt{C_x})^2$, si on pose V résultante = $V_R$ = V x $\sqrt{C_x}$, la formule (A) de la ligne I9 devient: Trainée = O.62 $V_R^2$ .

Connaissant la tainée par les mesures de laboratoire, donc le $C_x$, la vitesse du vent pour le déflecteur en forme de gouttière, notamment, est donc :
$V_R$ = V x $\sqrt{C_x}$ = V x $\sqrt{2,3}$ = V x I,5I, le $C_x$ de la gouttière étant égal à 2,3.

Réalisation préférée:

Les figures I3, I4 et I5 représentent une éolienne conforme à la présente invention, qui comprend une turbine 22 à pales disposées en cône, dont le sommet est en arrière, comme un entonnoir avalant le vent. Cette turbine est entourée par un déflecteur creux (23), en forme de gouttière circulaire, le creux se trouvent face au vent, qui vient s'y comprimer.

Le générateur, (35-Fig I3) est placé devant la turbine pour faciliter l'équilibrage de l'ensemble ainsi que son raccordement avec l'utilisation: bagues sur lesquelles frottent des balais en graphite pour l'électricité, tuyau à manchon tournant pour l'air comprimé, par ex., ces moyens étant d'usage courant. Le berceau (34-Fig I3) supporte le déflecteur fixe par les montants 36 et 37, et la turbine par les paliers 38 et 39 sur lesquels elle tourne. Le berceau pivote horizontalement sur un axe vertical (40), avec toutela tête de l'éolienne, selon la direction du vent, le centre d'application des forces dûes au vent (50-Fig I5) passant en arrière de l'axe (40).

La sécurité en cas de tempête est assurée de façon classique, l'ensemble pivotant d'un quart de tour sur son axe, grâce au panneau (4I-Fig I5) articulé par son milieu, 43, au bout d'un bras 42, et maintenu en position de tra vail par un ressort 44. Quand le vent est trop violent, le panneau 4I prend brusquement la position 45, Fig I5, qui augmente la prise du vent, ce qui entraine la turbine et son déflecteur vers la position d'effacement (46-Fig I5). Dans cette position, le safran 4I offre le maximum de prise au vent, et maintient l'éolienne de façon stable dans cette position tant que le vent ne faiblit pas fortement. Non seulement la surface au vent est diminuée, mais aussi son coëfficient de forme, la force appliquée passant de huit à un environ. Le couple créé par le safran est compensé par le désaxement de la turbine du côté opposé (non dessiné par soucis de clarté). Pendant la durée de l'effacement, la turbine (Fig I6) continue à produire, bien qu'ayant changé de sens de rotation, l'air la traversant latéralement. Il faut donc utiliser un générateur à sens de marche indifférent (un alternateur par ex.)

Les figures I3 et I4 montrent la position des déflecteurs supplémentaires 52 et 53 créant l'effet Coanda. Lorsqu'ils sont utilisés, le diamètre de la gouttière peut être diminué. Cette complication n'est intéressante que pour les grands modèles.

**Revendications**

1. Eolienne comprenant un rotor (2) conique ayant une pluralite de pales (22), ledit rotor ayant un axe central (54) et étant agencé pour tourner autour dudit axe central, ledit rotor étant également agencé pour être disposé avec son axe central sensiblement parallèle à la direction (8) du vent, caractérisée en ce que les pales occupent sensiblement l'ensemble de la surface conique extérieure du rotor, chacune des pales ayant une extrémité formant la pointe dudit rotor, ladite pointe étant disposée sensiblement sur ledit axe, lesdites pales étant disposées en oblique par rapport à ladite direction du vent, ladite éolienne comprenant également des déflecteurs (23) placés autour d'un bord périphérique du rotor.

2. Eolienne comprenant une roue sensiblement plate (55) ayant une pluralité de pales, ladite roue ayant un axe central (56) et étant agencée pour tourner autour dudit axe central, et étant agencée pour être disposée avec son axe central sensiblement parallèle à la direction (8) du vent, caractérisée en ce qu'en amont desdites pales, qui occupent sensiblement l'ensemble de la surface de la roue, une grille (21) de second déflecteur est montée, ladite grille étant agencée pour dévier ledit vent de telle façon qu'il attaque obliquement lesdites pales, ladite éolienne comprenant également des premiers déflecteurs (18) placés autour d'un bord périphérique de la roue.

3. Eolienne suivant la revendication 1 ou 2, caractérisée en ce que lesdites pales sont agencées pour dévier le vent qui les attaque de telle façon que le vent, après avoir traversé le plan formé par les surfaces des pales, les quitte en une direction sensiblement perpendiculaire à ce plan.

4. Eolienne suivant la revendication 1, caractérisée en ce que le rotor conique comporte une première partie agencée pour être placée face audit vent et une partie centrale plus reserrée agencée pour permettre une expansion dudit vent.

5. Eolienne suivant l'une des revendications 1 à 4, caractérisée en ce qu'elle comporte au moins un troisième déflecteur (23) périphérique agencé pour dévier le vent par rapport au volume formé par l'éolienne.

6. Eolienne suivant la revendication 5, caractérisée en ce que ledit troisième déflecteur comporte deux ailes (52, 53) disposées sensiblement parallèles l'une à l'autre et agencé pour créer l'effet Coanda.

7. Eolienne suivant la revendication 5, caractérisée en ce que ledit troisième déflecteur périphérique comporte une paroi cylindrique agencée pour canaliser l'air vers l'extérieur par rapport à l'éolienne.

## Claims

1. A wind engine comprising a conical rotor (2) having a plurality of blades (22), the said rotor having a central axis (54) and being arranged to turn about the said central axis, the said rotor also being arranged to be disposed with its central axis substantially parallel to the direction (8) of the wind, characterised in that the blades occupy substantially the whole of the external conical surface of the rotor, each blade having an end forming the tip of the said rotor, the said tip being substantially disposed on the said axis, the said blades being disposed obliquely in relation to the said direction of the wind, the said wind engine also comprising deflectors (23) placed around a peripheral edge of the rotor.

2. A winds engine comprising a substantially flat wheel (55) having a plurality of blades, the said wheel having a central axis (56) and being arranged to turn about the said central axis and being arranged to be disposed with its central axis substantially parallel to the direction (8) of the wind, characterised in that a second deflector grill (21) is mounted upstream of the said blades, which occupy substantially the whole surface of the wheel, the said grill being arranged to deflect the said wind in such a way that it acts obliquely on the said blades, the said wind engine also comprising first deflectors (18) placed around a peripheral edge of the wheel.

3. A wind engine according to claim 1 or 2, characterised in that the said blades are arranged to deflect the wind which acts on them in such a way that after crossing the plane formed by the surfaces of the blades the wind leaves them in a direction substantially perpendicular to the said plane.

4. A wind engine according to claim 1, characterised in that the conical rotor comprises a first part arranged to be placed facing the said wind and a more closed up central part arranged to permit the expansion of the said wind.

5. A wind engine according to any one of claims 1 to 4, characterised in that it comprises it least one third peripheral deflector (23) arranged to deflect the wind in relation to the volume formed by the wind engine.

6. A wind engine according to claim 5, characterised in that the said third deflector comprises two vanes (52, 53) disposed substantially parallel to each other and arranged to create a Coanda effect.

7. A wind engine according to claim 5, characterised in that the said third peripheral deflector comprises a cylindrical wall to channel the air towards the outside in relation to the wind engine.

## Patentansprüche

1. Windmotor mit einem konischen, eine Mehrzahl von Blättern (22) und eine zentrale Achse (54) aufweisenden Rotor (2), der so angeordnet ist, daß er um die zentrale Achse drehbar sowie mit seiner zentralen Achse im wesentlichen parallel zur Windrichtung (8) ausrichtbar ist,
dadurch gekennzeichnet, daß
die Blätter im wesentlichen die Gesamtheit der konischen Außenfläche des Rotors einnehmen, wobei jedes der ßlätter ein Ende hat, das die Spitze des Rotors bildet, die Spitze im wesentlichen auf der Achse angeordnet ist, die Blätter mit Bezug auf die Windrichtung schräg angeordnet sind, und der Windmotor ferner Ablenkglieder (23) umfaßt, die um einen Umfangsrand des Rotors herum angebracht sind.

2. Windmotor mit einem im wesentlichen flachen, eine Mehrzahl von Blättern und eine zentrale Achse (56) aufweisenden Rad (55), das so angeordnet ist, daß es um die zentrale Achse drehbar sowie mit seiner zentralen Achse im wesentlichen parallel zur Windrichtung ausrichtbar ist, dadurch gekennzeichnet, daß windstromaufwärts der Blätter, die im wesentlichen die Gesamtheit der Fläche des Rades einnehmen, ein Gitter (21) als zweites Ablenkglied so angeordnet ist, daß es den Wind derart ablenkt, daß er an den Blättern schräg angreift, wobei der Windmotor ferner erste Ablenkglieder (18) umfaßt, die um einen Umfangsrand des Rades herum angebracht sind.

3. Windmotor nach Anspruch 1 oder 2, dadurch gekennzeichnet, daß die Blätter zur Ablenkung des Windes, der an ihnen angreift, derart angeordnet sind, daß der Wind, nachdem er die von den Oberflächen der Blätter gebildete Ebene durchquert hat, diese in einer Richtung verläßt, die im wesentlichen senkrecht zu dieser Ebene ist.

4. Windmotor nach Anspruch 1, dadurch gekennzeichnet, daß der konische Rotor einen ersten Teil umfaßt, der so angeordnet ist, daß er dem Wind zugerichtet anbringbar ist, und einen stärker verengerten Mittelteil, der so angeordnet ist, daß er eine Expansion des Windes gestattet.

5. Windmotor nach einem der Ansprüche 1 bis 4, dadurch gekennzeichnet, daß er wenigstens ein drittes peripheres Ablenkglied (23) umfaßt, das so angeordnet ist, daß es den Wind mit Bezug auf das von dem Windmotor gebildete Volumen ablenkt.

6. Windmotor nach Anspruch 5, dadurch gekennzeichnet, daß das dritte Ablenkglied zwei Flügel (52, 53) umfaßt, die im wesentlichen parallel zueinander und so angeordnet sind, daß sie den Coanda-Effekt erzeugen.

7. Windmotor nach Anspruch 5, dadurch gekennzeichnet, daß das dritte periphere Ablenkglied eine zylindrische Wand umfaßt, die so angeordnet ist, daß sie die Luft mit Bezug auf den Windmotor zur Außenseite hin kanslisiert.

fig.1

fig. 2

fig.3

fig. 4

fig.5

fig.6

fig.7

fig. 8

fig. 9

fig.10

fig. 11

fig.12

EP 0 357 740 B1

fig 13

fig14

fig 15

fig 16